# EUROPEAN PATENT SPECIFICATION

(11) **EP 2 223 591 B1**
(45) Date of publication and mention of the grant of the patent: **21.08.2013**
(21) Application number: 10154972.3
(22) Date of filing: 27.02.2010
(51) Int. Cl.: A01K 11/00

(54) **Tag applicator and method of using the same**
Etikettenbefestigungsanlage und Verfahren zu ihrer Verwendung
Applicateur d'étiquettes et procédé d'utilisation

(30) Priority: 27.02.2009 EP 09002866; 04.10.2009 EP 09012540
(43) Date of publication of application: 01.09.2010
(73) Proprietor: Piglets Treatment System BV, 5809 EH, Leunen (NL)
(72) Inventor: Claessens, Antoon Willem Johan, 5809 EH, Leunen (NL)
(74) Representative: Janssen, Paulus J. P.

(56) References cited:
- EP-A1- 1 243 526
- WO-A1-94/14316
- WO-A2-2008/083688
- DE-A1- 19 726 467

## Description

The present invention pertains to a tag application device in combination with a cartridge comprising a tag application means for applying a tag to an animal at a tagging site, incorporating for example a commonly known pliers-type application means for applying ear or wing tags, supply means for sequentially supplying tags being assembled in the form of a strip from a cartridge to the tagging site, and positioning means for automatically positioning a distal tag of the strip at the tagging site. The invention also pertains to a method for applying tags to animals using the said device and a cartridge for use with the device and method.

### Prior art

An application device according to the preamble is known from EP 0 482 902. The known device is a hand-held tool comprising a cartridge section wherein a strip comprising a plurality of interconnected ear tags can be manually loaded. The device is operable to apply a force to a tag positioned at the tagging site, to thereby apply the tag to an animal. The device further comprises a supply means to sequentially supply each tag from the cartridge to the tagging site. This supply means cooperates with guide means so as to enable a single tag, which is separated from the strip in a step preceding the actual tagging, to be moved along the guide means and be positioned at the tagging site. The supply means are operable in direct response to the application means, such that application of a tag is immediately followed by the supply of a next tag. This known device is suitable to apply a plurality of tags relatively fast. However, applicant realised that with this known device significant operator intervention is needed when a large number of animals has to be tagged. This not only true for the actual tagging operation, which requires manual labour, but also applies to the intermittent loading of tag strips.

In UK patent specification 2212092 there is disclosed an application device for a one piece tag wherein the device incorporates a rotatable cartridge having a plurality of cavities. Each separate tag can be pre-loaded into each of the cavities. During operation of the device the tags are removed sequentially from the cavities whereupon the cartridge indexes so that a new cavity is presented for the next tagging operation. This means that individual tags need to be loaded manually before the operator can actually carry out the tagging operations in quick succession.

FR-A-2463581 discloses an application device for ID-tags for poultry, wherein the tags are loaded into a cartridge section in the form of a strip of tags. The tags are initially joined together at their sides and are separated when the jaws of the application tool advance to close the tag into its final position. Still, a significant amount of operator intervention is needed when a large number of animals has to be tagged, comparable to the amount of intervention needed when applying the device known from EP 0 482 902.

NL 1002477 discloses a self-supporting (as opposed to hand-held) tag application device wherein the tags are manually loaded one by one, and actual tagging is performed by having the operator push a tagging mechanism with one of his feet. This device mitigates the physical demands posed by any of the hand-held devices as described supra. Still, a significant amount of operator intervention is needed since each of the tags has to be loaded manually.

DE-A-19726467 discloses a self-supporting tag application device.

### Object of the invention

It is an object of the invention to provide a tag application means and method of using the same, which requires less time for applying a large number of tags to a group of animals. To this end a self-supporting application device in combination with a cartridge, as defined in claim 1, has been invented comprising a frame, and connected to that frame a tag application means for applying a tag to an animal at a tagging site, supply means for sequentially supplying tags being assembled in the form of a continuous strip from a cartridge to the tagging site, positioning means for automatically positioning a distal tag of the strip at the tagging site, wherein the cartridge is factory filled with the continuous strip of tags, and a distal section of the strip, being external of the cartridge, is operatively connectable with the supply means.

An important aspect of this new device is the fact that the device is not hand-held but self-supporting (for example suitable for standing on a floor or hanging down from a ceiling), in combination with an automatic sequential supply of tags from a cartridge which cartridge is factory filled with a continuous strip of tags. Applicant realized that for significantly decreasing the time needed to tag a large number of animals, it is very important that the supply of tags to the tagging site, i.e. the position of the application means where the tag is actually applied to an animal, requires hardly any operator intervention. Prior art solutions using cartridges are available, but still the operator has to re-load the cartridge typically after 5-15 animals have been tagged. Indeed, the number of tags in these cartridges cannot be increased significantly for these prior art devices since the operator has to manually carry the device including the cartridge. It was applicant's recognition that by using a self-supporting device, this restriction no longer applies, and larger cartridges containing many more tags assembled in the form of a continuous strip can be used. This on its turn enables factory filling of the cartridge, so that for the filling of the cartridge with tags no operator action is needed at all. In combination, this has led to a device and method allowing an operator to apply significantly more tags per hour to animals than with existing devises, without increasing, or even decreasing, the physical burden for the operator.

The invention enables a method, as defined in claim 9, for applying tags to n animals confined in an animal keeping space (such as a corral, stable, trailer etc.), n being a natural number greater than 2, comprising installing the tag application device, taking a first cartridge which is factory filled with a continuous strip of tags, removing a distal section of the strip from the first cartridge, and operatively connecting this section with the supply means of the tag application device, automatically supplying a distal tag of the strip to the tagging site, and automatically positioning this distal tag at this site, taking a first animal and bringing a body portion of this animal to the tagging site, applying a tag to the animal's body portion at the tagging site using the application means, releasing the first animal and taking a second one, repeating the tagging operation until n animals are tagged, and when the first cartridge is empty, replacing it with a second one by removing a distal section of the strip contained in this second cartridge, and operatively connecting this section with the supply means of the tag application device. This way, very conveniently a large number of animals can be tagged in a short amount of time.

Lastly, the invention pertains to the cartridge, as defined in claim 9, for use in a combination according to the invention, wherein the cartridge is factory filled with a continuous strip of tags being packed in a folded way. In this cartridge, an end of the strip is preferably located at a predetermined opening site of the cartridge, such that upon opening, a distal section of the strip can be easily removed from the cartridge and brought in operative connection with the supply means of the device.

### Definitions

"Self-supporting" means to be able and used without being held or supported by an operator.

A "tag" is a label, for external application to an animal's body part (for example an ear, a wing, a leg etc.), suitable for identification or recognition of the animal. Typical examples are items of plastic, leather, paper or metal in the form of a strip or in the form of interconnectable disc-like (or otherwise shaped) articles. The term "tag" thus also comprises an item which, when connected with another item, forms a functional tag for an animal. Such (often two-part) tags are known i.a. from BE 1008924A3.

A "cartridge" is a modular unit designed to be used in connection with main equipment, wherein the unit is suitable for containing a consumable to be used by the main equipment.

A "continuous strip" means a strip comprising at least 20 adjacent items, typically more than 50, preferably more than 100, more preferably over 250, up to even 1000 or more items. The strip may be in the form of one single tape (optionally for example folded or wound), or an assembly of tapes arranged side-by-side (to form a plane) or in any other way.

"Automatic" means without operator intervention. The term "automatic" does not exclude that an action is operator initiated or stopped, but actual execution of the action needs no help from an operator.

"Factory filled" means industrial filling at a supplier's site, after which a filled pack (cartridge, magazine etc.) is sent to an end-user who actually applies the items contained in the pack for their intended purpose.

An "empty cartridge" means a cartridge which no longer has a functional stock of material contained therein. This means that there can still be material inside of the cartridge, but this can no longer be used in the same effective way when compared to a situation wherein the cartridge is not "empty". For example in the case of tags, when the cartridge solely contains 50 separated (e.g. individual or twinned) tags, no longer assembled in the form of a continuous strip, these tags cannot be used in the same effective way as compared to a situation wherein these tags are assembled as a continuous strip.

### Embodiments of the invention

In an embodiment the cartridge is separate from the device. In the prior art, cartridges are used that are actually part of or at least connected to the device. This limits the design of the device as well as the cartridge. Applicant recognised that a separate cartridge allows the same principle advantages to be obtained, whereas the design constraints are less strict. This enables to decrease production costs significantly, for example since one can make use of a standardized pack, such as a simple carton box or reel, as a cartridge.

In another embodiment the cartridge is a pack containing the strip in a folded way. This embodiment has the advantage that the strip of tags is packed in a relative compact way. By folding a strip, a three-dimensional structure may be provided which in effect requires a relatively small pack for a certain number of tags.

In yet another embodiment, the tags of the strip are interconnected. It is known from the prior art to use a strip of unconnected tags carried on a longitudinal tape, for example as described in from BE 1008924. However, in such a constitution one needs an additional carrying material next to the tags. This material is an extra supply which has to be removed from the tags and disposed of which is disadvantageous in the present device. Applicant recognized that by interconnecting the tags, for example by welding such as known from EP 1 690 451, in particular section [0033], this problem can be overcome.

In another embodiment the supply means comprise a guide and a motor separate from that guide. A guide can be advantageously used to reliably steer the strip towards the tagging site. Such a guide may for example be a curved rail, part of reel, sprocket wheel or other guiding means. It is known to incorporate a motor in the guide means, for example by combining a sprocket with an electromotor. However, combining these functions decreases the design freedom of the device. Applicant therefore proposes to separate the drive function from the guide function, and use a motor separate from the guide.

In another embodiment the device comprises a detector to detect the presence of an animal's body portion, in particular an ear, at the tagging site. A detector for detecting the presence of an animals body portion at the tagging site increase the reliability of the device but also further increases the speed at which tags can be applied since no operator decision is needed to actually apply a tag. As soon as the body portion is in place, the tag will be applied.

With respect to the method of the present invention, in an embodiment, when the cartridge is empty, it is preferably disposed of. This can be done in an environmental friendly way, for example by using a carton box as cartridge. In another embodiment the cartridge is sent back to the factory for re-filling with a continuous strip of tags.

In another embodiment, the applying of a tag to an animal is operator initiated. Alternatively and preferably however, the applying of a tag to an animal is automatically initiated when an animal's body portion is detected at the tagging site.

The invention will now be described in more detail by showing an embodiment of the claimed combination, cartridge and method of using the same.

### Examples

Figure 1 schematically shows a device according to the invention, in conjunction with a piglet's body portion to which an ear tag is applied

Figure 2 schematically shows another view of this device, also depicting a cartridge wherein continuous strips of tags are contained.

Example 1 describes a method of using the device and cartridges.

### Figure 1

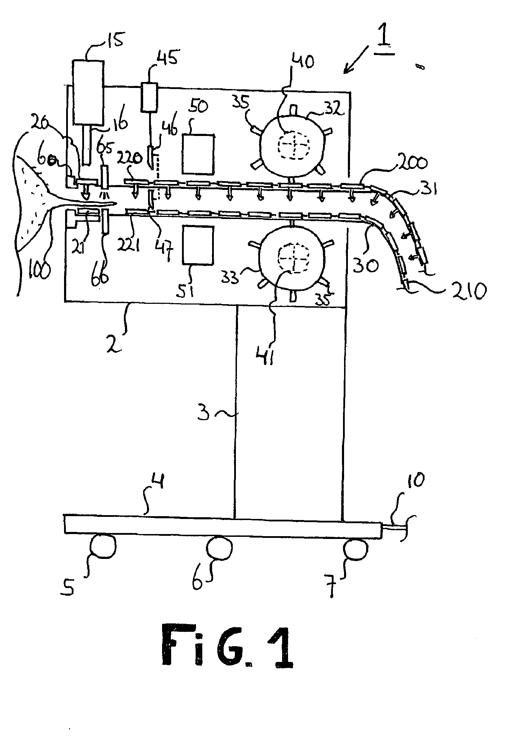

In figure a tag application device 1 according to the present invention is schematically shown. Basis of this self-supporting device 1 is frame 2, which frame extends to a carrier surface 4 via support-column 3. The carrier surface is provided with wheels 5, 6 and 7 to enable easy movement of the device. The carrier surface 4 has an extension 10 (only partly shown in Figure 1) for carrying tools or other items that are not part of the device as such.

The device comprises as a prime part the tag application means 15, which on its turn comprises a shaft 16 which is devised for actual application of a tag to an animal. For this, shaft 16 can be pushed in the direction of tag 20 (a so-called "male"-part), which tag is then pushed in the direction of tag 21 (a so-called "female"-part; which part rests on a support having a whole in its middle) in order for the two tags to be connected and constitute a functional tag in the body portion of animal 100, in this case a piglet's ear. The principle of constituting one functional tag by connecting two tags, one being a male-part and the other being a female-part, by pushing the male part through the female part by making use of a push shaft is commonly known in the art.

The tags are guided via guide means 30 and 31, which means extend from a position adjacent the tagging site (i.e. the site in between tags 20 and 21, where the piglet's ear rests), to the external of the device, where the guide means each form a curve that bends towards extension 10. Guide means 31 guides a continuous strip 200 of male ear tags, the tags being interconnected by means of welding as described in section [0033] of EP 1 690 451. Guide means 30 guides a continuous strip 210 of female ear tags, interconnected in the same way. In operation, distal tag 220 of strip 200 and distal tag 221 of strip 210 are first cut of the strip by using blades 46 and 47 which are part of cutting device 45. After these two distal tags have been cut off, wheels 32 and 33, which respectively grasp strips 200 and 210 by having pins 35 enter into an adjacent tag of the strips, are attracted by electromagnets 50 and 51. This way, the strips are guided in the direction of the tagging site. The cut off tags 220 and 221 are pushed forward to take the position of tags 20 and 21. Automatic positioning takes place since the forward movement is stopped when the tags hit datum 60, which serves as a reference position. After that, the wheels 32 and 33 are released by the electromagnets and brought back in their original position. The wheels than each turn (wheel 32 clockwise by using electro motor 40; wheel 33 counter clockwise by using electro motor 41) to bring the next pin 35 in grasping connection with the next upstream tag. This way, the distal tags of each of the strips reaches the same position as tags 220 and 221 have in Figure 1.

Device 1 comprises a detector to detect the presence of an ear at the tagging site. This detector comprises a light source 65 and a sensor 66. When an ear is present in a position as indicated in Figure 1, the sensor receives an amount of light below the a predetermined threshold value. This is the trigger for tagging means 15 to push shaft 16 in the direction of tag 21. Immediately after the distal end of the shaft has passed the position where tag 21 rests, the shaft is pulled back into its original position. A functional tag is then formed in the ear of the piglet.

### Figure 2

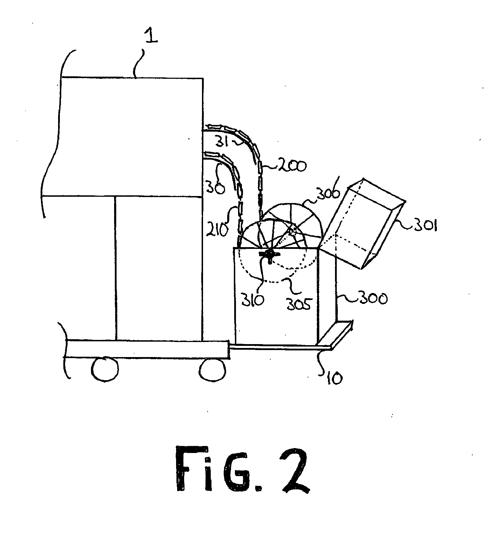

Figure 2 schematically shows another view of this device 1, also depicting the cartridge 300 wherein continuous strips of tags (200 and 210) are contained. In this embodiment, the cartridge rests on extension 10 of the frame 2 of the device 1. The cartridge is no more than a simple carton box, comprising a lid 301. Internally of the box, two reels 305 and 306 are carried on an axle 310. Reel 305 has wound thereon strip 210. Reel 306 has wound thereon strip 200. The distal sections of the strips are in operative connection with guide means 30 and 31 respectively.

In another embodiment (not shown), the strips are folded in an S-like way in the cartridge. Folding items in an S-like way to fill a cartridge is as such known in the art, for example from EP 1 243 526. The advantage of folding the strips in an S-like way is that no additional support for the strips, such as reels, is needed. The S-shape allows easy and reliable withdrawal of a strip from the cartridge.

### Example 1

In operation, firstly a cartridge 300 is placed on extension 10, whereafter lid 301 is opened. Because of the positioning of the reels 305 and 306 near the top of the opened cartridge 300, the distal sections of each of the strips 200 and 210 are inherently easy to grasp by an operator after the cartridge is opened (optionally after the reels are turned over). The distal sections of each of the strips 200 and 210 are then brought in operative connection with guides 31 and 30 respectively. For this, the distal sections are simply pushed forward over the guides in the direction of the tagging site unit each of the strips is grasped by wheels 32 and 33 respectively. From the on, the device takes over and automatically forwards the strips until a distal tag is brought in a position downstream of the cutting blades 46 and 47 (i.e. to a position taken by tags 220 and 221 in Figure 1). After that, the distal tags are automatically forwarded to the tagging site, at which site they are automatically positioned when they reach datum 60.

The device is now initiated for actual tagging to take place. For this to be accomplished, an operator (not shown) takes a piglet 100 and puts its ear into the device 1 at the tagging site. When the ear is entered to such an extent that it is sensed by sensor 66 of the detector, a tagging action is automatically initiated and completed. After this, the piglets ear is released and the piglet can be put down, or optionally the next ear of this piglet can be tagged. Since the forwarding of the next tags to the tagging site (as described under Figure 1) is completed within 1 second, the device is ready for applying a next tag almost immediately after a preceding tag has been applied. This way up to more than 1000 tags can be applied per hour without a heavy physical burden for the operator. As soon as the cartridge is empty and the proximal sections of the strips have passed the wheels 32 and 33, a new cartridge can be placed on extension 10. After opening, the strips contained therein are on their turn brought in operative connection with guides 30 and 31. The empty cartridge can be disposed of or sent back to the supplier's factory for refilling with continuous strips of ear tags. In case of the use of reels upon which the strips are wound, refilling of the cartridge, or at least the reels is preferred. In case the cartridge contains the strips in a folded manner, in which case the cartridge can be as simple as a carton box, the cartridge is preferably disposed.

## Claims

1. A combination of a cartridge (300) comprising tags being assembled in the form of a continuous strip (200, 210) and a self-supporting tag application device (1) comprising:
- a frame (2), and connected to that frame (2),
- a tag application means (15, 16) for applying a tag (20, 21) to an animal (100) at a tagging site,
- supply means (31, 32, 40, 50; 30, 33, 41, 51) for sequentially supplying the tags from the cartridge (300) to the tagging site,
- positioning means (60) for automatically positioning a distal tag of the strip (200, 210) at the tagging site,
wherein the cartridge (300) is factory filled with the continuous strip of tags (200, 210), and a distal section of the strip, being external of the cartridge (300), is operatively connected with the supply means (32, 35; 33, 35).

2. A combination according to claim 1, **characterised in that** the cartridge (300) is separate from the device (1).

3. A combination according to any of the preceding claims, **characterised in that** the cartridge (300) is a pack containing the strip (200, 210) in a folded way.

4. A combination according to any of the preceding claims, **characterised in that** the tags 220; 221) of the strip (200, 210) are interconnected.

5. A combination according to any of the preceding claims, **characterised in that** the supply means comprise a guide (31; 30) and a motor (40; 41) separate from that guide.

6. A combination according to any of the preceding claims, **characterised in that** the device (1) comprises a detector (65, 66) to detect the presence of an animal's body portion, in particular an ear, at the tagging site.

7. A cartridge (300) for use in a combination according to any of the preceding claims, **characterised in that** the cartridge (300) is factory filled with a continuous strip of tags (200, 210) being packed in a folded way.

8. A cartridge (300) according to claim 7, **characterised in that** the tags are interconnected.

9. A method for applying tags (20, 21) to n animals (100) confined in an animal keeping space, n being a natural number greater than 2, comprising:
- installing a self-supporting tag application device (1) comprising a frame (2), and connected to that frame, a tag applications means (15, 16) for applying a tag (20, 21) to an animal (100) at a tagging site, supply means (31, 32, 40, 50; 30, 33, 41, 51) for sequentially supplying tags being assembled in the form of a continuous strip (200, 210) to the tagging site, and positioning means (60) for automatically positioning a distal tag of the strip at the tagging site,
- taking a first cartridge (300) which is factory filled with a continuous strip of tags (200, 210),
- removing a distal section of the strip (200, 210) from the first cartridge (300), and operatively connecting this section with the supply means (31, 32, 40, 50; 30, 33, 41, 51) of the tag application device (1),
- automatically supplying a distal tag (220, 221) of the strip to the tagging site, and
- automatically positioning this distal tag (220, 221) at this site,
- taking a first animal and bringing a body portion of this animal (100) to the tagging site,
- applying a tag (20, 21) to the animal's body portion at the tagging site using the application means,
- releasing the first animal and taking a second one,
- repeating the tagging operation until n animals are tagged,
- and when the first cartridge (300) is empty, replacing it with a second one by removing a distal section of the strip contained in this second cartridge, and operatively connecting this section with the supply means (31, 32, 40, 50; 30, 33, 41, 51) of the tag application device (1).

10. A method according to claim 9, wherein the first cartridge (300) is disposed of when empty.

11. A method according to claim 9, wherein the first cartridge (300) is sent back to a factory for re-filling with a continuous strip of tags (200, 210).

12. A method according to any of the claims 9 to 11, **characterised in that** the applying of a tag (20, 21) to an animal (100) is operator initiated.

13. A method according to any of the claims 9 to 11, **characterised in that** the applying of a tag (20, 21) to an animal (100) is automatically initiated when an animal's body portion is detected at the tagging site.

## Patentansprüche

1. Kombination aus einer Kassette (300), die Marken umfasst, welche in der Form eines fortlaufenden Streifens (200, 210) zusammengesetzt sind, und einer freistehenden Markenanbringungsvorrichtung (1), umfassend:
- einen Rahmen (2), und, mit diesem Rahmen (2) verbunden,
- ein Markenanbringungsmittel (15, 16), um eine Marke (20, 21) an einem Tier (100) an einem Markierungsort anzubringen,
- Zufuhrmittel (31, 32, 40, 50; 30, 33, 41, 51), um die Marken der Reihe nach von der Kassette (300) zu dem Markierungsort zuzuführen,
- Positionierungsmittel (60), um eine distale Marke des Streifens (200, 210) automatisch an dem Markierungsort zu positionieren,
wobei die Kassette (300) werksseitig mit dem fortlaufenden Streifen von Marken (200, 210) befüllt wurde und ein distaler Abschnitt des Streifens, der sich außerhalb der Kassette (300) befindet, betrieblich mit den Zufuhrmitteln (32, 35; 33, 35) verbunden ist.

2. Kombination nach Anspruch 1, **dadurch gekennzeichnet, dass** die Kassette (300) von der Vorrichtung (1) getrennt ist.

3. Kombination nach einem der vorhergehenden Ansprüche, **dadurch gekennzeichnet, dass** die Kassette (300) eine Packung ist, die den Streifen (200, 210) auf eine gefaltete Weise enthält.

4. Kombination nach einem der vorhergehenden Ansprüche, **dadurch gekennzeichnet, dass** die Marken (220; 221) des Streifens (200, 210) miteinander verbunden sind.

5. Kombination nach einem der vorhergehenden Ansprüche, **dadurch gekennzeichnet, dass** die Zufuhrmittel eine Führung (31; 30) und einen von dieser Führung gesonderten Motor (40; 41) umfassen.

6. Kombination nach einem der vorhergehenden Ansprüche, **dadurch gekennzeichnet, dass** die Vorrichtung (1) einen Detektor (65, 66) umfasst, um das Vorhandensein eines Körperabschnitts eines Tiers, insbesondere eines Ohrs, an dem Markierungsort festzustellen.

7. Kassette (300) zur Verwendung in einer Kombination nach einem der vorhergehenden Ansprüche, **dadurch gekennzeichnet, dass** die Kassette (300) werksseitig mit einem fortlaufenden Streifen von Marken (200, 210), die auf eine gefaltete Weise verpackt sind, befüllt wurde.

8. Kassette (300) nach Anspruch 7, **dadurch gekennzeichnet, dass** die Marken miteinander verbunden sind.

9. Verfahren zum Anbringen von Marken (20, 21) an n Tieren (100), die in einem Bereich zum Halten von Tieren eingeschlossen sind, wobei n eine natürliche Zahl ist, die größer als 2 ist, umfassend:
- Einrichten einer freistehenden Markenanbringungsvorrichtung (1), die einen Rahmen (2), und, mit diesem Rahmen verbunden, ein Markenanbringungsmittel (15, 16), um eine Marke (20, 21) an einem Tier (100) an einem Markierungsort anzubringen, Zufuhrmittel (31, 32, 40, 50; 30, 33, 41, 51), um Marken, die in der Form eines fortlaufenden Streifens (200, 210) zusammengesetzt sind, der Reihe zu dem Markierungsort zuzuführen, und Positionierungsmittel (60), um eine distale Marke des Streifens automatisch an dem Markierungsort zu positionieren, umfasst,
- Nehmen einer ersten Kassette (300), die werksseitig mit einem fortlaufenden Streifen von Marken (200, 210) befüllt wurde,
- Entnehmen eines distalen Abschnitts des Streifens (200, 210) aus der ersten Kassette (300), und betriebliches Verbinden dieses Abschnitts mit den Zufuhrmitteln (31, 32, 40, 50; 30, 33, 41, 51), der Markenanbringungsvorrichtung (1),
- automatisches Zuführen einer distalen Marke (220, 221) des Streifens zu dem Markierungsort, und
- automatisches Positionieren dieser distalen Marke (220, 221) an diesem Ort,
- Nehmen eines ersten Tiers und Bringen eines Körperabschnitts dieses Tiers (100) an den Markierungsort,
- Anbringen einer Markierung (20, 21) an dem Körperabschnitt des Tiers an dem Markierungsort unter Verwenden des Anbringungsmittels,
- Loslassen des Tiers und Nehmen eines zweiten ,
- Wiederholen der Markierungstätigkeit, bis n Tiere markiert sind,
- und Ersetzen der ersten Kassette (300), wenn diese leer ist, durch eine zweite durch Entnehmen eines distalen Abschnitts des Streifens, der in dieser zweiten Kassette enthalten ist, und betriebliches Verbinden dieses Abschnitts mit den Zufuhrmitteln (31, 32, 40, 50; 30, 33, 41, 51) der Markenanbringungsvorrichtung (1).

10. Verfahren nach Anspruch 9, wobei die erste Kassette (300) entsorgt wird, wenn sie leer ist.

11. Verfahren nach Anspruch 9, wobei die erste Kassette (300) zu einer Fabrik zurückgesendet wird, um mit einem fortlaufenden Streifen von Marken (200, 210) wiederbefüllt zu werden, wenn sie leer ist.

12. Verfahren nach einem der Ansprüche 9 bis 11, **dadurch gekennzeichnet, dass** das Anbringen einer Marke (20, 21) an einem Tier (100) durch eine Bedienungsperson ausgelöst wird.

13. Verfahren nach einem der Ansprüche 9 bis 11, **dadurch gekennzeichnet, dass** das Anbringen einer Marke (20, 21) an einem Tier (100) automatisch ausgelöst wird, wenn an dem Markierungsort ein Körperteil eines Tiers festgestellt wird.

## Revendications

1. Combinaison d'une cartouche (300) comprenant des étiquettes qui sont assemblées sous la forme d'une bande continue (200, 210) et d'un dispositif d'application d'étiquettes à auto-support (1) comprenant :
- un cadre (2), et connecté à ce cadre (2),
- un moyen d'application d'étiquettes (15, 16) pour appliquer une étiquette (20, 21) sur un animal (100) sur un site de marquage,
- des moyens d'approvisionnement (31, 32, 40, 50 ; 30, 33, 41, 51) pour fournir séquentiellement les étiquettes au site de marquage à partir de la cartouche (300),
- des moyens de positionnement (60) pour positionner automatiquement une étiquette distale de la bande (200, 210) sur le site de marquage,
dans laquelle la cartouche (300) est remplie à l'usine avec la bande continue d'étiquettes (200, 210), et une section distale de la bande se trouvant à l'extérieur de la cartouche (300) étant connectée de manière opérative au moyen d'approvisionnement (32, 35 ; 33, 35).

2. Combinaison selon la revendication 1, **caractérisée en ce que** la cartouche (300) est indépendante du dispositif (1).

3. Combinaison selon l'une quelconque des revendications précédentes, **caractérisée en ce que** la cartouche (300) est un emballage contenant la bande (200, 210) d'une manière pliée.

4. Combinaison selon l'une quelconque des revendications précédentes, **caractérisée en ce que** les étiquettes (220 ; 221) de la bande (200, 210) sont interconnectées.

5. Combinaison selon l'une quelconque des revendications précédentes, **caractérisée en ce que** le moyen d'approvisionnement comprend un guide (31 ; 30) et un moteur (40 ; 41) indépendant de ce guide.

6. Combinaison selon l'une quelconque des revendications précédentes, **caractérisée en ce que** le dispositif (1) comprend un détecteur (65, 66) pour détecter la présence d'une partie du corps d'un animal, en particulier d'une oreille, sur le site de marquage.

7. Cartouche (300) pour l'utilisation en une combinaison selon l'une quelconque des revendications précédentes, **caractérisée en ce que** la cartouche (300) est remplie à l'usine avec une bande continue d'étiquettes (200, 210) emballées d'une manière pliée.

8. Cartouche (300) selon la revendication 7, **caractérisée en ce que** les étiquettes sont interconnectées.

9. Procédé pour appliquer des étiquettes (20, 21) sur n animaux (100) confinés dans un espace de garde d'animaux, n étant un entier naturel supérieur à 2, comprenant :
- installer un dispositif d'application d'étiquettes à auto-support (1) comprenant un cadre (2), et connecté à ce cadre, un moyen d'application d'étiquettes (15, 16) pour appliquer une étiquette (20, 21) sur un animal (100) sur un site de marquage, un moyen d'approvisionnement (31, 32, 40, 50 ; 30, 33, 41, 51) pour fournir séquentiellement des étiquettes assemblées sous la forme d'une bande continue (200, 210) au site de marquage, et un moyen de positionnement (60) pour positionner automatiquement une étiquette distale de la bande sur le site de marquage,
- prendre une première cartouche (300) qui est remplie à l'usine avec une bande continue d'étiquettes (200, 210),
- enlever une section distale de la bande (200, 210) de la première cartouche (300) et connecter de manière opérative cette section au moyen d'approvisionnement (31, 32, 40, 50 ; 30, 33, 41, 51) du dispositif d'application d'étiquettes (1),
- fournir automatiquement une étiquette distale (220, 221) de la bande au site de marquage, et
- positionner automatiquement cette étiquette distale (220, 221) sur ce site,
- prendre un premier animal et amener une partie du corps de cet animal (100) sur le site de marquage,
- appliquer une étiquette (20, 21) sur la partie de corps de l'animal sur le site de marquage en utilisant le moyen d'application,
- libérer le premier animal et en prendre un deuxième,
- répéter l'opération d'étiquetage jusqu'à ce que n animaux soient étiquetés,
- et lorsque la première cartouche (300) est vide, la remplacer par une deuxième en enlevant une section distale de la bande contenue dans cette deuxième cartouche, et connecter de manière opérative cette section au moyen d'approvisionnement (31, 32, 40, 50 ; 30, 33, 41, 51) du dispositif d'application d'étiquettes (1).

10. Procédé selon la revendication 9, dans lequel la première cartouche (300) est éliminée lorsqu'elle est vide.

11. Procédé selon la revendication 9, dans lequel la première cartouche (300) est renvoyée à une usine pour le re-remplissage avec une bande continue d'étiquettes (200, 210).

12. Procédé selon l'une quelconque des revendications 9 à 11, **caractérisé en ce que** l'application d'une étiquette (20, 21) sur un animal (100) est initiée par un opérateur.

13. Procédé selon l'une quelconque des revendications 9 à 11, **caractérisé en ce que** l'application d'une étiquette (20, 21) sur un animal (100) est initiée automatiquement lorsqu'une partie du corps d'un animal est détectée sur le site de marquage.
